(19) Europäisches Patentamt / European Patent Office / Office européen des brevets

(11) **EP 3 324 748 B1**

## (12) EUROPEAN PATENT SPECIFICATION

(45) Date of publication and mention
of the grant of the patent:
**02.09.2020  Bulletin 2020/36**

(51) Int Cl.:
***A23G 4/08*** (2006.01)

(21) Application number: **16741515.7**

(86) International application number:
**PCT/US2016/042122**

(22) Date of filing: **13.07.2016**

(87) International publication number:
**WO 2017/015031 (26.01.2017 Gazette 2017/04)**

(54) **CHEWING GUM AND GUM BASES CONTAINING ELASTOMERS DERIVED FROM EDIBLE OIL SOURCES**

KAUGUMMI UND GUMMIGRUNDSTOFFE MIT VON SPEISEÖLQUELLEN ABGELEITETEN ELASTOMEREN

BASES DE GOMME ET DE GOMME À MÂCHER CONTENANT DES ÉLASTOMÈRES DÉRIVÉS DE SOURCES D'HUILES COMESTIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.07.2015   US 201562193625 P**

(43) Date of publication of application:
**30.05.2018   Bulletin 2018/22**

(73) Proprietor: **Wm. Wrigley Jr. Company
Chicago, IL 60642 (US)**

(72) Inventor: **LIU, Jingping
Chicago, Illinois 60642 (US)**

(74) Representative: **Haseltine Lake Kempner LLP
Redcliff Quay
120 Redcliff Street
Bristol BS1 6HU (GB)**

(56) References cited:
**WO-A1-01/47368           WO-A2-2011/116130
US-A1- 2013 136 822      US-A1- 2015 087 732**

**Description**

BACKGROUND OF THE INVENTION

The present invention relates to chewing gum and chewing gum bases. More specifically, this invention relates to improved formulations for chewing gum bases and chewing gums containing elastomers synthesized by polymerizing epoxidized edible oil with a multi-functional nucleophile such as carboxylic acid, anhydride, alcohol, amine, amino acid, hydroxycarboxylic acid and the substances with the mixtures of the above functional groups (carboxylic acid, hydroxyl, amino).

Primary components of a chewing gum typically are a water-insoluble gum base portion and a water-soluble bulking agent portion typically including a bulking agent together with minor amounts of secondary components such as flavors, colorants, water-soluble softeners, gum emulsifiers, acidulants and sensates. Typically, the water-soluble portion, sensates, and flavors dissipate during chewing and the gum base is retained in the mouth throughout the chew.

Water-insoluble gum base typically includes elastomers, elastomer solvents, softeners/emulsifiers (e.g. fats, oils, waxes, mono- and di-glycerides), and fillers. Elastomers commonly used in gum bases are synthetic elastomers such as polyisobutylene, isobutylene-isoprene copolymers ("butyl rubber"), conventional styrene-butadiene copolymers, polyisoprene, and combinations thereof. Also, natural elastomers such as natural rubbers can be used.

Because the elastomer is an important functional component of a gum base, the characteristics of such elastomers have a significant impact on characteristics of a chewing gum composition, especially regarding those properties important to consumer acceptance. Among properties important to consumers are odor, taste, chewing properties, and mouthfeel, including the ability of a gum composition to form a cud while chewing. Furthermore, physical characteristics of the elastomer affect processibility of a gum base and of a chewing gum formulation including the gum base.

Chewing gums were originally formulated with natural gums, primarily jelutong and chicle, which were obtained by tapping rainforest rubber trees. Due to fluctuating supply and price of the natural products and increasing demand for chewing gum products, these rubbers have largely been replaced by synthetic elastomers. The elastomer most widely used currently in chewing gum is butyl rubber due to consumer acceptance of chewing properties of the resulting chewing gum product and the lack of objectionable odor or taste associated with butyl rubber. Polyisobutylene (PIB) is another elastomer frequently used in gum bases. Lower molecular weight (below 100,000 viscosity average) PIB improves compatibility of base components, modifies elasticity and softens the chewing characteristics of gum bases to which it is added. However, it is not generally usable as the sole elastomer in a gum base formula. Higher molecular weight (at least 100,000 viscosity average) PIB acts more like butyl rubber, but its use is less common. Styrene butadiene copolymer rubber (SBR) has been used successfully as an elastomer in gum products, particularly bubblegums.

The above elastomers are normally derived from a petroleum feedstock and processed to food-grade standards. Recently, consumers have expressed preference for more natural foods and a desire to minimize use of products derived from petroleum. Additionally, due to fluctuations in the price and supply of petroleum, continued availability of these food-grade elastomers has become uncertain. While some non-petroleum derived elastomers have been proposed, problems with cost, supply, texture, flavor or the use of potentially toxic solvents and reagents have precluded widespread implementation of these alternative elastomers. In this regard, it is desirable to find an inexpensive, readily available, consumer-acceptable gum base elastomer which is derived from a natural food ingredient and processed without using potentially toxic solvents and reagents.

US2013136822 discloses chewing gum bases containing soy protein based elastomers and methods of making same.

Vegetable oils can be extracted from a variety of food plant sources including soy, sunflower, rape (canola®), corn, olive, sunflower, safflower, peanut, palm, coconut, cottonseed, sesame, linseed, avocado and many others. Additionally, edible oils may be derived from animal sources such as fish, poultry, sheep, pigs, cattle, goats and so forth.

Polyfunctional carboxylic acids are commonly used for food purposes such as adjusting pH and providing tartness. Example of food acceptable polyfunctional acids are citric, fumaric acid, adipic acid, malic acid, succinic acid, suberic acid, sebacic acid, dodecanedioic acid, glucaric acid, glutamic acid, glutaric acid, azelaic acid, and tartaric acid.

SUMMARY OF THE INVENTION

A chewing gum contains a water-insoluble gum base portion containing an elastomer polymerized from an epoxidized edible oil and a polyfunctional nucleophile such as carboxylic acid.

DESCRIPTION OF THE INVENTION

The present invention is defined by the claims.
The present invention provides improved chewing gum formulations and chewing gum bases. In accordance with the present invention, chewing gum is provided that includes an elastomer derived from edible oil. More specifically, the chewing gums and gum bases comprise an elastomer prepared by reacting an epoxidized edible oil with a multi-functional nucleophile such as polyfunctional carboxylic acid or hydoxycarboxylic acid to produce an elastomeric polymer. These Edible Oil Elastomers (EOEs) may be added to gum base formulations as a complete or partial replacement of petroleum-based elastomers.

A variety of gum base and chewing gum formulations including EOEs can be created and/or used in accordance with the present invention. The base formulations of the present invention may be conventional bases that include wax or are wax-free, are tacky or non-tacky and which have a wide range of chewing textures. The gum formulations can be low or high moisture formulations containing low or high amounts of moisture-containing syrup. EOEs can be used in sugar-containing chewing gums and also in low sugar and non-sugar containing gum formulations made with sorbitol, mannitol, other polyols, and non-sugar carbohydrates. Non-sugar formulations can include low or high moisture sugar-free chewing gums.

In various preferred embodiments, EOE may be used as the sole elastomer or it may be is combined with other base elastomers for use in chewing gum base. Such other elastomers, where used, include synthetic elastomers including polyisobutylene, isobutylene-isoprene copolymers, styrene-butadiene copolymers, polyisoprene, and combinations thereof. Natural elastomers that can be used include natural rubbers such as chicle. However, it is preferred that the EOEs completely replace the petroleum-derived elastomers normally used in conventional gum bases.

In some various preferred embodiments, the complex shear modulus of the EOE is greater than $2X10^3$ Pa or greater than $6X10^3$ Pa or greater than $2X10^4$ Pa at 37°C. In some embodiments, the complex shear modulus of the EOE is less than $1X10^7$ Pa, or less than $1X10^6$ Pa, or less than $1X10^5$ Pa at 37°C. In some embodiments, the EOE will have a complex shear modulus of about $2X10^4$ at 37°C.

The EOEs of the present invention require little if any plasticization to function in chewing gum bases. These materials typically are elastomeric at body temperature in the sense of having an ability to be stretched to at least twice of an original length and to return to substantially such original length (such as no more than 150%, preferably no more than 125% of the original length) upon release of stress.

In some embodiments, the EOE will be the sole polymeric component of the insoluble gum base. In other embodiments, the EOE will be combined with softeners, fillers, colors, antioxidants and other conventional, non-elastomeric gum base components. In some embodiments, the EOE gum bases may be used to replace conventional gum bases in chewing gum formulas which additionally contain water-soluble bulking agents, flavors, high-intensity sweeteners, colors and other optional ingredients. These chewing gums may be formed into sticks, tabs, tapes, coated or uncoated pellets or balls or any other desired form. By substituting the EOEs of the present invention for conventional gum base elastomers, safe, economical, consumer-acceptable chewing gum products can be manufactured without using petroleum-derived ingredients of potentially uncertain availability.

The EOE, when used according to the present invention, affords the chewing gum excellent texture, shelf life and flavor quality. Because EOEs have chewing properties similar to other elastomers in most respects, gum bases containing EOEs create a resultant chewing gum product that has a high consumer-acceptability. Furthermore, the EOEs may be practically, easily and inexpensively prepared from natural food grade ingredients. In addition, gum bases can prepared from EOEs without energy intensive compounding steps.

Gum bases comprising EOEs may be prepared with fewer ingredients than prior art bases. For example, high quality bases can be prepared using only EOE, fat, filler and optionally minor ingredients such as colors and antioxidants.

The present invention provides in some embodiments an improved chewing gum formulation, improved shelf life, and improved flavor quality. In some embodiments, the present invention provides chewing gums which upon chewing, produce cuds which have improved environmental benefits such as degradability or reduced adhesion.

Additional features and advantages of the present invention are described in, and will be apparent from, the detailed description of the presently preferred embodiments.

Edible oils (glycerollipids) are mostly extracted from vegetables, plants and animal fats, are mainly triglycerides, an ester formed by one glycerol and three fatty acids. The fatty acids may vary considerably in molecular chain length, unsaturation degree as well as other functional groups. The aliphatic chain-length range is from 2 to 80 but commonly from 12 up to 24 carbon atoms, and 0 to 3 double bonds " (reference: 1) Ding, R. ROMP-based thermosetting polymers from modified castor oil with various cross-linking agents. (Iowa State University, 2012); 2) Gunstone, F. D., Harwood, J. L. & Padley, F. B. The lipid handbook. (Chapman & Hall, 1994). For purposes of the present invention, it is essential that at least some of the fatty acids residues esterified to the glycerin molecule have at least one point of unsaturation, i.e. at least one double bond between two carbons in the chain. Each triglyceride molecule should have at least three points of unsaturation among the three fatty acid residues and four to six is preferable. These double bonds are converted to an epoxide ring, for example by reaction of the oil with formic acid and hydrogen peroxide at 75°C. Preferably all of the double bonds present in the tryglyceride molecule are epoxidized.

The epoxidized oil will be reacted with one or more polyfunctional acids. By poly functional, it is meant that the acid will have at least three functional groups (-COOH, -$NH_2$, -$CONH_2$ or -OH) in its molecular structure. Examples of such acids include malic acid (three functional groups), citric acid and tartaric acid which have four functional groups, and the amino acid serine which has six. Other amino acids having three functional groups include aspartic acid, asparagine, threonine, glutamic acid, glutamine and lysine.

The EOEs useful in the present invention are lightly crosslinked by virtue of the multifunctional nature of the edible oil and acid monomers. The degree of crosslinking may be expressed as gel content. In some embodiments, the polymer will have a gel content of at least 12% or at least 15%, or at least 20%, or at least 25%, or at least 30% to ensure adequate cohesion, tackiness and elasticity. In order to prevent excessive firmness and lack of malleability or deformability, it is important that the gel content be at most 59%, or at most 65%, or at most 70%, or at most 75%, or at most 85%. Methods of determining gel content are known in the polymer sciences. Any suitable method may be used including the method described below:

Crosslinking measurement (gel content)

Sample Drying:

Approximately 12 g of an EOE sample (is placed on an aluminum dish and dried in a vacuum oven at room temperature for one day at maximum vacuum.

THF-Insoluble gel content measurement

Weigh an empty Corning "C" crucible filter and a 50 ml centrifuge tube (w/o cap) via analytical balance with 0.0001g minimum degree of precision.

Introduce 2-3 g of the dried EOE sample into the centrifuge tube and weight via analytical balance with 0.0001g minimum degree of precision. Subtract the tare weight and record the resulting sample weight as $W_s$.

Add ~45 ml of THF (tetrahydrofuran) into the tube, and mix using a vortex mixer for a minute, then shake and allow to settle until the sample disintegrates into tiny gel pieces particles. This may take two hours or more.

Filter the resulting gel solution through a 30 ml crucible filter into a filtering flask. Wash the tube with two successive 5 ml portions of THF and pass the washings through the filter.

Pour the liquid from filtering flask into the centrifuge tube and place the tube in a tube rack under a fume hood overnight.

Dry the crucible filter in the vacuum oven at 55°C/1 kPa for four hours. Cool to room temperature and weigh via analytical balance with 0.0001g minimum degree of precision. Subtract the tare weight and record the resulting gel weight as ($W_g$).

$$\text{Gel content} = 100 \cdot W_g/W_s \text{ (\% by weight)}$$

In some embodiments, the EOEs useful in the present invention will have a minimum molecular weight of 8,000 daltons. In some embodiments, the minimum molecular weight will be 2000 daltons, or 5000 daltons, or 10,000 daltons. Too low a molecular weight will result in a polymer that is excessively soft and lacking cohesion and elasticity.

In some embodiments, the THF soluble portion of EOEs (i.e. the non-crosslinked portion) useful in the present invention will have a maximum molecular weight of 130,000 daltons. In some embodiments, the maximum molecular weight will be 200,000 daltons, or 500,000 daltons, or 800,000 daltons, or 1,200,000 daltons. Too high a molecular weight will result in a polymer that is excessively tough, hard and crumbly during chewing.

In some embodiments, the EOEs useful in the present invention will have glass transition temperature of at least -30°C or at least -10°C or at least -5°C when measured by DSC at 10 °C /min heating rate. In some embodiments, the EOEs useful in the present invention will have glass transition temperature of at most 37°C or at most 0°C or at most -8°C when measured by DSC at 10 °C /min heating rate.

In some embodiments, the EOEs useful in the present invention will have a ratio of epoxidized oil to acid (or other nucleophile) in the finished polymer of at least 4.0:1 by weight or 0.84:1 by mole for soybean oil/citric acid derived polymer or 0.48:1 by ratio of number of epoxide derivatives to number of nucleophilic derivatives or at least 0.35:1 or at least 0.25:1. In some embodiments, the EOEs useful in the present invention will have a ratio of epoxidized oil to nucleophile in the finished polymer of no more than 5.5:1 by weight or 1.1:1 by mole for soybean oil/citric acid derived polymer or 2:1 by ratio of number of epoxide derivatives to number of nucleophilic derivatives or no more than 1:1 or no more than 0.95:1. Note that this ratio may differ significantly from the ratio of the two components reacted to produce the polymer due to the amount of either monomer that may not react in the polymerization. Thus the ratio of constituents in the finished polymer is most effectively determined using FTIR measurements of the relative strength of absorbance in their respective wavelength bands. This may be performed according to the following method:

FTIR determination of ratio of oil to citric acid in an EOE:

A 1 mg sample is placed on the top-plate of an FTIR spectrometer (such as a Perkin Elmer Spectrum 100) and pressed with a Universal Diamond/ZnSe ATR with 1 Reflection Top-Plate and Pressure Arm

Perform a scan of the spectrum in wavelength range: 400 cm-1 -4000 cm-1; resolution: 4 cm-1, scanning number: 4~32

The characteristic absorbance bands of reactive functional groups with the least inference are:

OH stretching on alcohol @ 3000~3600cm-1
OH stretching on carboxylic acid @ 3000~2500 cm-1
C=O stretching on citric acid @ 1690~1750 cm-1
C=O stretching on esters @ 1735~1750 cm-1
epoxide ring asymmetrical deformation @ 842 cm-1
epoxide ring symmetrical deformation @ 823cm-1

Quantitative analysis:

The characteristic absorbance bands of inert functional groups with the least inference are:

H-OH scissoring on citric acid @ 2613 cm-1
C-C-O in-phase stretching on citric acid @ 880 cm-1
long aliphatic chain in-phase rocking on ESBO @ 723 cm-1

Based on Lambert beer law the following calculations are made:
Edible Oil/Citric Acid = A723cm-1/A880cm-1 (if there is no ethanol interference) or Edible Oil/Citric Acid = A723cm-1/A2613cm-1

A complete description of a process for synthesizing the EOEs useful in the present invention is found in US 2015/0087732 which is hereby incorporated by reference. The method comprises mixing a polyfunctional acid with an alcohol solvent to form a solution, reacting said solution having carboxylic groups with epoxidized vegetable oil, and heating the solution at a range of approximately 50° C. to 80° C., to form an amorphous polyester elastomer.

Elastomer plasticizers commonly used for petroleum-based elastomers may be optionally used in this invention including but are not limited to, natural rosin esters, often called estergums, such as glycerol esters of partially hydrogenated rosin, glycerol esters of polymerized rosin, glycerol esters of partially or fully dimerized rosin, glycerol esters of rosin, pentaerythritol esters of partially hydrogenated rosin, methyl and partially hydrogenated methyl esters of rosin, pentaerythritol esters of rosin, glycerol esters of wood rosin, glycerol esters of gum rosin; synthetics such as terpene resins derived from alpha-pinene, beta-pinene, and/or d-limonene; and any suitable combinations of the foregoing. The preferred elastomer plasticizers also will vary depending on the specific application, and on the type of elastomer which is used.

In addition to natural rosin esters, also called resins, elastomer plasticizers may include other types of plastic resins. These include polyvinyl acetate having a GPC weight average molecular weight of about 2,000 to about 90,000, polyisoprene, polyethylene, vinyl acetate-vinyl laurate copolymer having vinyl laurate content of about 5 to about 50 percent by weight of the copolymer, and combinations thereof. Preferred weight average molecular weights (by GPC) for polyisoprene are 50,000 to 80,000 and for polyvinyl acetate are 10,000 to 65,000 (with higher molecular weight polyvinyl acetates typically used in bubble gum base). For vinyl acetate-vinyl laurate, vinyl laurate content of 10-45 percent by weight of the copolymer is preferred. Preferably, a gum base contains a plastic resin in addition to other materials functioning as elastomer plasticizers.

Additionally, a gum base may include fillers/texturizers and softeners/emulsifiers. Softeners (including emulsifiers) are added to chewing gum in order to optimize the chewability and mouth feel of the gum.

Softeners/emulsifiers that typically are used include tallow, hydrogenated tallow, hydrogenated and partially hydrogenated vegetable oils, cocoa butter, mono- and di-glycerides such as glycerol monostearate, glycerol triacetate, lecithin, paraffin wax, microcrystalline wax, natural waxes and combinations thereof. Lecithin and mono- and di-glycerides also function as emulsifiers to improve compatibility of the various gum base components.

Fillers/texturizers typically are inorganic, water-insoluble powders such as magnesium and calcium carbonate, ground limestone, silicate types such as magnesium and aluminum silicate, clay, alumina, talc, titanium oxide, mono-, di- and tri-calcium phosphate and calcium sulfate. Insoluble organic fillers including cellulose polymers such as wood as well as combinations of any of these also may be used.

Selection of various components in chewing gum bases or chewing gum formulations of this invention typically are dictated by factors, including for example the desired properties (e.g., physical (mouthfeel), taste, odor, and the like) and/or applicable regulatory requirements (e.g., in order to have a food grade product, food grade components, such as food grade approved oils like vegetable oil, may be used.)

Colorants and whiteners may include FD&C-type dyes and lakes, fruit and vegetable extracts, titanium dioxide, and combinations thereof.

Antioxidants such as BHA, BHT, tocopherols, propyl gallate and other food acceptable antioxidants may be employed to prevent oxidation of fats, oils and elastomers in the gum base.

As noted, the base may include wax or be wax-free. An example of a wax-free gum base is disclosed in U.S. Patent No. 5,286,500.

A water-insoluble gum base typically constitutes approximately 5 to about 95 percent, by weight, of a chewing gum of this invention; more commonly, the gum base comprises 10 to about 50 percent of a chewing gum of this invention; and in some preferred embodiments, 20 to about 35 percent, by weight, of such a chewing gum.

In addition to a water-insoluble gum base portion, a typical chewing gum composition includes a water-soluble bulk portion (or bulking agent) and one or more flavoring agents. The water-soluble portion can include high intensity sweeteners, binders, flavoring agents, water-soluble softeners, gum emulsifiers, colorants, acidulants, fillers, antioxidants, and other components that provide desired attributes.

Water-soluble softeners, which are also known as water-soluble plasticizers and plasticizing agents, generally constitute between approximately 0.5 to about 15% by weight of the chewing gum. Water-soluble softeners may include glycerin, lecithin, and combinations thereof. Aqueous sweetener solutions such as those containing sorbitol, hydrogenated starch hydrolysates (HSH), corn syrup and combinations thereof, may also be used as softeners and binding agents (binders) in chewing gum.

Preferably, a bulking agent or bulk sweetener will be useful in chewing gums of this invention to provide sweetness, bulk and texture to the product. Typical bulking agents include sugars, sugar alcohols, and combinations thereof. Bulking agents typically constitute from about 5 to about 95% by weight of the chewing gum, more typically from about 20 to about 80% by weight and, still more typically, from about 30 to about 70% by weight of the gum. Sugar bulking agents generally include saccharide containing components commonly known in the chewing gum art, including, but not limited to, sucrose, dextrose, maltose, dextrin, dried invert sugar, fructose, levulose, galactose, corn syrup solids, and the like, alone or in combination. In sugarless gums, sugar alcohols such as sorbitol, maltitol, erythritol, isomalt, mannitol, xylitol and combinations thereof are substituted for sugar bulking agents. Combinations of sugar and sugarless bulking agents may also be used.

In addition to the above bulk sweeteners, chewing gums typically comprise a binder/softener in the form of a syrup or high-solids solution of .sugars and/or sugar alcohols. In the case of sugar gums, corn syrups and other dextrose syrups (which contain dextrose and significant amounts higher saccharides) are most commonly employed. These include syrups of various DE levels including high-maltose syrups and high fructose syrups. In the case of sugarless products, solutions of sugar alcohols including sorbitol solutions and hydrogenated starch hydrolysate syrups are commonly used. Also useful are syrups such as those disclosed in US 5,651,936 and US 2004-234648. Such syrups serve to soften the initial chew of the product, reduce crumbliness and brittleness and increase flexibility in stick and tab products. They may also control moisture gain or loss and provide a degree of sweetness depending on the particular syrup employed.

High intensity artificial sweeteners can also be used in combination with the above-described sweeteners. Preferred sweeteners include, but are not limited to sucralose, aspartame, salts of acesulfame, alitame, neotame, saccharin and its salts, cyclamic acid and its salts, glycyrrhizin, stevia, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to about 8% by weight. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Examples of low caloric bulking agents include: polydextrose; Raftilose, Raftilin; fructooligosaccharides (NutraFlora); Palatinose oligosaccharide; Guar Gum Hydrolysate (Sun Fiber); or indigestible dextrin (Fibersol). However, other low calorie bulking agents can be used. In addition, the caloric content of a chewing gum can be reduced by increasing the relative level of gum base while reducing the level of caloric sweeteners in the product. This can be done with or without an accompanying decrease in piece weight.

A variety of flavoring agents can be used. The flavor can be used in amounts of approximately 0.1 to about 15 weight percent of the gum, and preferably, about 0.2 to about 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Sensate components which impart a perceived tingling or thermal response while chewing, such as a cooling or heating effect, also may be included. Such components include cyclic and acyclic carboxamides, menthol derivatives, and capsaicin among others. Acidulants may be included to impart tartness.

In some embodiments of the present invention, gum bases comprising the EOE elastomer may be formulated with higher levels of elastomer than typical prior art gum bases. In some embodiments, higher levels of gum base will be used in the finished chewing gum product compared to typical prior art chewing gums. The intention is that the finished gum piece should contain at least 15% or at least 17% or at least 19% to prevent dissolution of the gum base during chewing. This compares with typical levels of elastomer in prior art in gum products of 3 to 5%.

High melting point fats such as fully hydrogenated vegetable oils or other triglycerides of saturated long-chain fatty acids having melting points above 60°C can be effective to reduce the tackiness and mask the off notes from the EOE. These fats and oils preferably maintain not less than 50% of their crystallinity in the final products in order to achieve the desired texture. In some cases, prolonged aging or tempering under controlled conditions(3~4 weeks) may be needed. High melting point natural waxes (e.g., Carnauba wax with a melting point of 81°C) can also be used for this purpose. However, it can reduce the cohesion of gum and enhance the bitter off-note.

Fillers such as calcium carbonate or talc can reduce the tackiness by increasing cud modulus and reducing the contact area with the teeth.

The present invention may be used with a variety of processes for manufacturing chewing gum.

Chewing gum bases of the present invention may be easily prepared by combining the EOE with optional ingredients such as high melting oils and waxes and inorganic fillers such as calcium carbonate and talc. If additional ingredients such as softeners, plastic resins, emulsifiers, fillers, colors and antioxidants are desired, they may be added by conventional batch mixing processes or continuous mixing processes. Process temperatures are generally from about 60 to 150°C or preferably 80°C to 120°C in the case of a batch process. If it is desired to combine the EOE with conventional elastomers, it is preferred that the conventional elastomers be formulated into a conventional gum base before combining with the EOE gum base. To produce the conventional gum base, the elastomers are first ground or shredded along with filler. Then the ground elastomer is transferred to a batch mixer for compounding. Essentially any standard, commercially available mixer known in the art (e.g., a Sigma blade mixer) may be used for this purpose. The first step of the mixing process is called compounding. Compounding involves combining the ground elastomer with filler and elastomer plasticizer (elastomer solvent). This compounding step generally requires long mixing times (30 to 70 minutes) to produce a homogeneous mixture. After compounding, additional filler and elastomer plasticizer are added followed by PVAc and finally softeners while mixing to homogeneity after each added ingredient. Minor ingredients such as antioxidants and color may be added at any time in the process. The conventional base is then blended with the EOE base in the desired ratio. Whether EOE is used alone or in combination with conventional elastomers, the completed base is then extruded or cast into any desirable shape (e.g., pellets, sheets or slabs) and allowed to cool and solidify.

Alternatively, continuous processes using mixing extruders, which are generally known in the art, may be used to prepare the gum base. In a typical continuous mixing process, initial ingredients (including ground elastomer, if used) are metered continuously into extruder ports various points along the length of the extruder corresponding to the batch processing sequence. After the initial ingredients have massed homogeneously and have been sufficiently compounded, the balance of the base ingredients are metered into ports or injected at various points along the length of the extruder. Typically, any remainder of elastomer component or other components are added after the initial compounding stage. The composition is then further processed to produce a homogeneous mass before discharging from the extruder outlet. Typically, the transit time through the extruder will be substantially less than an hour. If the gum base is prepared from EOE without conventional elastomers, the necessary length of the extruder needed to produce a homogeneous gum base will be greatly reduced with a corresponding reduction in transit time. In addition, the EOE need not be preground before addition to the extruder. It is only necessary to ensure that the EOE is reasonably free-flowing to allow controlled, metered feeding into the extruder inlet port.

Exemplary methods of extrusion, which may optionally be used in accordance with the present invention, include the following, : (i) U.S. Pat. No. 6,238,710, claims a method for continuous chewing gum base manufacturing, which entails compounding all ingredients in a single extruder; (ii) U.S. Pat. No. 6,086,925 discloses the manufacture of chewing gum base by adding a hard elastomer, a filler and a lubricating agent to a continuous mixer; (iii) U.S. Pat. No. 5,419,919 discloses continuous gum base manufacture using a paddle mixer by selectively feeding different ingredients at different locations on the mixer; and, (iv) yet another U.S. Pat. No. 5,397,580 discloses continuous gum base manufacture wherein two continuous mixers are arranged in series and the blend from the first continuous mixer is continuously added to the second extruder.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, tabs or pellets or by extruding and cutting into chunks.

Generally, the ingredients are mixed by first melting the gum base and adding it to the running mixer. The gum base may alternatively be melted in the mixer. Color and emulsifiers may be added at this time.

A chewing gum softener such as glycerin can be added next along with part of the bulk portion. Further parts of the bulk portion may then be added to the mixer. Flavoring agents are typically added with the final part of the bulk portion. The entire mixing process typically takes from about five to about fifteen minutes, although longer mixing times are sometimes required.

In yet another alternative, it may be possible to prepare the gum base and chewing gum in a single high-efficiency extruder as disclosed in U.S. Patent No. 5,543,160. Chewing gums of the present invention may be prepared by a continuous process comprising the steps of: a) adding gum base ingredients into a high efficiency continuous mixer; b) mixing the ingredients to produce a homogeneous gum base, c) adding at least one sweetener and at least one flavor into the continuous mixer, and mixing the sweetener and flavor with the remaining ingredients to form a chewing gum product; and d) discharging the mixed chewing gum mass from the single high efficiency continuous mixer.

Of course, many variations on the basic gum base and chewing gum mixing processes are possible.

EXAMPLES

The following examples of the invention and comparative formulations illustrate certain aspects and embodiments of the present invention, but do not limit the invention described and claimed. Amounts listed are in weight percent, based upon the total weight of the gum base, or chewing gum, as the case may be.

Two samples of Edible Oil Elastomer (EOE) were prepared from Epoxidized Soybean Oil and Citric Acid according to method of US 2015/0087732. The polymerized oils were tested and found to have properties shown in Table 1.

| TABLE 1 | | |
|---|---|---|
|  | Example 1 | Example 2 |
| ESO:CA (weight) | 4.54 | 4.02 |
| ESO:CA (molar) | 0.95 | 0.84 |
| Ratio Epoxide:nucleophilic groups | 1.00 | 0.92 |

Gum bases were prepared from the EOE of Example 1 according to the formulas in Table 2.

| Table 2 | | | | | |
|---|---|---|---|---|---|
|  | Ex. 3 | Ex. 4 | Ex. 5 | Ex. 6 | Ex. 7 |
| EOE of Ex. 1 | 58.00 | 58.00 | 43.50 | 58.00 | 58.00 |
| Carnauba Wax |  | - | 25.00 | 18.58 | 5.15 |
| Calcium Carbonate | 20.60 | 20.60 | 15.45 | 11.49 | 15.45 |
| Glycerol Monostearate | 4.24 | 4.24 | 3.18 | 2.37 | 4.24 |
| Fully Hydrogenated cottonseed Oil | 4.83 | 4.83 | 3.62 | 2.69 | 4.83 |
| Hydrogenated Soybean Oil | 4.49 | 4.49 | 3.37 | 2.50 | 4.49 |
| Partially Hydrogenated Cottonseed Oil | 4.49 | 4.49 | 3.37 | 2.50 | 4.49 |
| Lecithin | 3.29 | 3.29 | 2.47 | 1.83 | 3.29 |
| BHT | 0.06 | 0.06 | 0.05 | 0.03 | 0.06 |
| Total | 100.00 | 100.00 | 100.00 | 100.00 | 100.00 |

The Gum bases of Examples 3-7 were used to make chewing gums according to the formulas in Table 3, 4 and 5.

|  | Ex. 8 | Ex. 9 | Ex. 10 | Ex. 11 | Ex. 12 |
|---|---|---|---|---|---|
| Carnauba wax | 8.00 |  |  |  | 8.20 |
| Gum base of Ex. 4 | 24.00 |  |  |  | 35.00 |
| Gum base of Ex. 5 |  | 32.00 |  |  |  |
| Gum base of Ex. 6 |  |  | 32.00 |  |  |
| Gum base of Ex. 7 |  |  |  | 32.00 |  |
| Sorbitol | 45.00 | 45.00 | 45.00 | 45.00 | 45.00 |
| Mannitol | 3.00 | 3.00 | 3.00 | 3.00 | 3.00 |
| Co-Evaporated Polyol Syrup and Glycerin | 15.00 | 15.00 | 15.00 | 15.00 | 15.00 |
| Glycerin | 3.50 | 3.50 | 3.50 | 3.50 | 3.50 |
| Flavor | 1.00 | 1.00 | 1.00 | 1.00 | 1.00 |
| Aspartame | 0.50 | 0.50 | 0.50 | 0.50 | 0.50 |
|  |  |  |  |  |  |
| Total | 100.00 | 100.00 | 100.00 | 100.00 | 100.00 |

| Table 4 | |
|---|---|
|  | Example 13 |
| Sugar | 53.13 |
| Corn Syrup | 14.85 |
| Glycerin | 1.23 |
| Flavor | 0.79 |
| Gum Base of Ex. 3 | 30.00 |
| Total | 100.00 |

| Table 5 | |
|---|---|
|  | Example 14 |
| Carnauba Wax | 8.20 |
| Gum Base of Ex.7 | 35.00 |
| Sorbitol | 33.80 |
| Mannitol | 3.00 |
| Co-Evaporated Polyol Syrup and Glycerin | 15.00 |
| Glycerin | 3.50 |
| Spearmint Flavor | 1.00 |
| Aspartame | 0.50 |
| Total | 100.00 |

The chewing gums were evaluated in an informal sensory test and the comments in Table 6 were reported.

| Table 6 | |
|---|---|
| Example 8 | Fell apart 1st bite, came back after 30 sec, not sticky, citric off-note |
| Example 9 | Firm 1st bite, crumbling until 30 sec, bitter, not sticky, fell apart in 4 min |
| Example 10 | OK 1st bite, sticky, soft tacky chew for more than 7 min, bitter |
| Example 11 | Soft and sticky, citric off-note |
| Example 12 | OK 1st bite, sli. sticky, soft tacky chew for more than 7 min, bitter |
| Example 14 | OK 1st bite, sli. sticky, soft tacky chew for more than 7 min, bitter |

Unless defined otherwise, technical and scientific terms used herein have the same meaning as is commonly understood by one of ordinary skill in the art to which this invention belongs. Unless otherwise stated, percentages provided are percentages by weight. The terms "first", "second", and the like, as used herein do not denote any order, quantity, or importance, but rather are used to distinguish one element from another. Also, the terms "a" and "an" do not denote a limitation of quantity, but rather denote the presence of at least one of the referenced item, and the terms "front", "back", "bottom", and/or "top", unless otherwise noted, are merely used for convenience of description, and are not intended to limit what is being described to any one position or spatial orientation.

While only certain features of the invention have been illustrated and described herein, many modifications and changes will occur to those skilled in the art. It is, therefore, to be understood that the appended claims are intended to cover all such modifications and changes.

## Claims

1.  A chewing gum base comprising an Edible Oil Elastomer (EOE) wherein the Edible Oil Elastomer is prepared by reacting an epoxidized edible oil with a multifunctional carboxylic acid.

2.  A gum base of claim 1 wherein the Edible Oil Elastomer has a gel content of at least 12%, wherein the gel content expresses the degree of crosslinking of the edible oil elastomer.

3.  A gum base of any preceding claim wherein the Edible Oil Elastomer has a gel content of at least 30%.

4.  A gum base of any preceding claim wherein the Edible Oil Elastomer has a gel content of no more than 85%.

5.  A gum base of any preceding claim wherein the Edible Oil Elastomer has a gel content of no more than 65%.

6.  A gum base of any preceding claim wherein the Edible Oil Elastomer has a gel content of no more than 59%.

7.  A gum base of any preceding claim wherein the Edible oil Elastomer has a molecular weight of at least 8,000.

8.  A gum base of any preceding claim wherein the Edible oil Elastomer has a molecular weight of no more than 130,000.

9.  A gum base of any preceding claim wherein the Edible oil Elastomer has a complex shear modulus of the EOE is greater than $2X10^3$ Pa.

10. A gum base of any preceding claim wherein the Edible oil Elastomer has a complex shear modulus of the EOE is greater than $2X10^4$ Pa.

11. A gum base of any preceding claim wherein the Edible oil Elastomer has a complex shear modulus of the EOE is less than $1X10^7$ Pa.

12. A gum base of any preceding claim wherein the Edible oil Elastomer has a complex shear modulus of the EOE is less than $1X10^5$ Pa.

13. The gum base of any preceding claim wherein the gum base further comprises at least one of an inorganic filler, a high melting fat or a wax.

**14.** The gum base of any preceding claim wherein the gum base further comprises a fully hydrogenated oil.

**15.** A chewing gum comprising the chewing gum base as defined in any one of claims 1 to 14.

**Patentansprüche**

**1.** Kaugummigrundstoff umfassend ein Speiseölelastomer (SÖE), wobei das Speiseölelastomer durch Reagieren eines epoxidierten Speiseöls mit einer multifunktionellen Carbonsäure hergestellt wird.

**2.** Gummigrundstoff nach Anspruch 1, wobei das Speiseölelastomer einen Gelgehalt von mindestens 12 % aufweist, wobei der Gelgehalt den Vernetzungsgrad des Speiseölelastomers ausdrückt.

**3.** Gummigrundstoff nach einem vorhergehenden Anspruch, wobei das Speiseölelastomer einen Gelgehalt von mindestens 30 % aufweist.

**4.** Gummigrundstoff nach einem vorhergehenden Anspruch, wobei das Speiseölelastomer einen Gelgehalt von nicht mehr als 85 % aufweist.

**5.** Gummigrundstoff nach einem vorhergehenden Anspruch, wobei das Speiseölelastomer einen Gelgehalt von nicht mehr als 65 % aufweist.

**6.** Gummigrundstoff nach einem vorhergehenden Anspruch, wobei das Speiseölelastomer einen Gelgehalt von nicht mehr als 59 % aufweist.

**7.** Gummigrundstoff nach einem vorhergehenden Anspruch, wobei das Speiseölelastomer ein Molekulargewicht von mindestens 8.000 aufweist.

**8.** Gummigrundstoff nach einem vorhergehenden Anspruch, wobei das Speiseölelastomer ein Molekulargewicht von nicht mehr als 130.000 aufweist.

**9.** Gummigrundstoff nach einem vorhergehenden Anspruch, wobei das Speiseölelastomer einen Komplexschermodul des SÖE von mehr als $2 \times 10^3$ Pa aufweist.

**10.** Gummigrundstoff nach einem vorhergehenden Anspruch, wobei das Speiseölelastomer einen Komplexschermodul des SÖE von mehr als $2 \times 10^4$ Pa aufweist.

**11.** Gummigrundstoff nach einem vorhergehenden Anspruch, wobei das Speiseölelastomer einen Komplexschermodul des SÖE von weniger als $1 \times 10^7$ Pa aufweist.

**12.** Gummigrundstoff nach einem vorhergehenden Anspruch, wobei das Speiseölelastomer einen Komplexschermodul des SÖE von weniger als $1 \times 10^5$ Pa aufweist.

**13.** Gummigrundstoff nach einem vorhergehenden Anspruch, wobei der Gummigrundstoff ferner mindestens eines von einem anorganischen Füllstoff, einem hochschmelzenden Fett oder einem Wachs umfasst.

**14.** Gummigrundstoff nach einem vorhergehenden Anspruch, wobei der Gummigrundstoff ferner voll hydriertes Öl umfasst.

**15.** Kaugummi umfassend den Kaugummigrundstoff wie in einem der Ansprüche 1 bis 14 definiert.

**Revendications**

**1.** Base de chewing-gum comprenant un Élastomère d'Huile Comestible (EHC), l'Élastomère d'Huile Comestible étant préparé par mise en réaction d'une huile comestible époxydée avec un acide carboxylique polyfonctionnel.

**2.** Base de gomme selon la revendication 1, l'Élastomère d'Huile Comestible possédant une teneur en gel d'au moins 12 %, la teneur en gel exprimant le degré de réticulation de l'élastomère d'huile comestible.

3.  Base de gomme selon une quelconque revendication précédente, l'Élastomère d'Huile Comestible possédant une teneur en gel d'au moins 30 %.

4.  Base de gomme selon une quelconque revendication précédente, l'Élastomère d'Huile Comestible possédant une teneur en gel non supérieure à 85 %.

5.  Base de gomme selon une quelconque revendication précédente, l'Élastomère d'Huile Comestible possédant une teneur en gel non supérieure à 65 %.

6.  Base de gomme selon une quelconque revendication précédente, l'Élastomère d'Huile Comestible possédant une teneur en gel non supérieure à 59 %.

7.  Base de gomme selon une quelconque revendication précédente, l'Élastomère d'Huile Comestible possédant un poids moléculaire d'au moins 8 000.

8.  Base de gomme selon une quelconque revendication précédente, l'Élastomère d'Huile Comestible possédant un poids moléculaire non supérieur à 130 000.

9.  Base de gomme selon une quelconque revendication précédente, l'Élastomère d'Huile Comestible possédant un module de cisaillement complexe de l'EHC qui est supérieur à $2 \times 10^3$ Pa.

10. Base de gomme selon une quelconque revendication précédente, l'Élastomère d'Huile Comestible possédant un module de cisaillement complexe de l'EHC qui est supérieur à $2 \times 10^4$ Pa.

11. Base de gomme selon une quelconque revendication précédente, l'Élastomère d'Huile Comestible possédant un module de cisaillement complexe de l'EHC qui est inférieur à $1 \times 10^7$ Pa.

12. Base de gomme selon une quelconque revendication précédente, l'Élastomère d'Huile Comestible possédant un module de cisaillement complexe de l'EHC qui est inférieur à $1 \times 10^5$ Pa.

13. Base de gomme selon une quelconque revendication précédente, la base de gomme comprenant en outre au moins l'un parmi une charge inorganique, une graisse fondant à une température élevée ou une cire.

14. Base de gomme selon une quelconque revendication précédente, la base de gomme comprenant en outre une huile totalement hydrogénée.

15. Chewing-gum comprenant la base de chewing-gum telle que définie dans l'une quelconque des revendications 1 à 14.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013136822 A
- US 20150087732 A
- US 5286500 A
- US 5651936 A
- US 2004234648 A
- US 6238710 B
- US 6086925 A
- US 5419919 A
- US 5397580 A
- US 5543160 A

**Non-patent literature cited in the description**

- **GUNSTONE, F. D. ; HARWOOD, J. L. ; PADLEY, F. B.** The lipid handbook. Chapman & Hall, 1994